# EUROPÄISCHE PATENTANMELDUNG

(11) **EP 1 720 377 A2**
(43) Veröffentlichungstag der Anmeldung: **08.11.2006**
(21) Anmeldenummer: 06113266.8
(22) Anmeldetag: 28.04.2006
(51) Int. Cl.: H04R 25/00

(54) **Schnittstelleneinrichtung zur Signalübertragung zwischen einem Hörhilfegerät und einem externen Gerät**

(30) Priorität: 02.05.2005 DE 102005020322
(71) Anmelder: Siemens Audiologische Technik GmbH, 91058 Erlangen (DE)
(72) Erfinder: Beck, Frank, 91080, Spardorf (DE); Grafenberg, Esfandiar, 91090, Effeltrich (DE)
(74) Vertreter: Berg, Peter

(57) **Zusammenfassung**

Die Signalübertragung zwischen einem Hörhilfegerät (1, 10) und einem externen Gerät soll verbessert werden. Es wird hierzu eine am oder im Hörhilfegerät (1, 10) angeordnete erste Signalübertragungseinrichtung und eine mechanisch lösbar mit dem Hörhilfegerät (1, 10) verbindbare zweite Signalübertragungseinrichtung (5, 14) vorgeschlagen, wobei zwischen der ersten Signalübertragungseinrichtung und der zweiten Signalübertragungseinrichtung (5, 14) eine optische Signalübertragung erfolgt. Die bislang verwendeten elektrischen Kontakte können dadurch vermieden werden.

## Beschreibung

Die Erfindung betrifft eine Schnittstelleneinrichtung zur Signalübertragung zwischen einem Hörhilfegerät und einem externen Gerät, umfassend eine erste am oder im Hörhilfegerät angeordnete Signalübertragungseinrichtung und eine mechanisch lösbar mit dem Hörhilfegerät verbindbare zweite Signalübertragungseinrichtung.

Zur Signalübertragung zwischen einem Hörhilfegerät und einem externen Gerät sind verschiedene Signalübertragungsarten bekannt. Beispielsweise weisen Hörhilfegeräte häufig eine Programmierbuchse auf, durch die das Hörhilfegerät über ein Kabel und einen daran anschließenden Stecker mit einem Programmiergerät verbunden werden kann.

Aus der DE 298 19 993 U1 ist ein Audioschuh zum Anschluss an ein Hörhilfegerät bekannt, mit dem von einem Audiogerät abgegebene Audiosignale über ein Kabel zu dem Hörhilfegerät übertragen werden können. Sowohl das Hörhilfegerät als auch der Audioschuh weisen elektrische Kontakte zur Signalübertragung zwischen dem Audioschuh und dem Hörhilfegerät auf.

Neben einer Kabelverbindung zwischen einem Hörhilfegerät und einem externen Gerät ist auch eine drahtlose Signalübertragung zwischen den Geräten bekannt. So beschreibt die US 4,947,432 ein Programmiergerät mit einer Sendeeinrichtung sowie ein Hörhilfegerät mit einer Empfangseinrichtung zur drahtlosen Signalübertragung zwischen dem Programmiergerät und dem Hörhilfegerät. Die drahtlose Signalübertragung kann dabei durch Ultraschallsignale, Infrarotsignale oder elektromagnetische Signale ausgeführt werden. Damit lassen sich Entfernungen im Bereich einiger Meter bis einiger hundert Meter drahtlos überbrücken.

Aus der WO 01/39569 A2 ist eine Methode zur Signalübertragung zwischen einem Hörhilfegerät und einem externen Gerät bekannt, bei dem ein mit dem Gerät verbundenes Kabel in einer Magnethalterung mündet zur magnetischen Befestigung an dem Hörhilfegerät. Die Signalübertragung zwischen der Magnethalterung und dem Hörhilfegerät erfolgt auf induktive oder kapazitive Weise.

Die bekannten Verfahren zur drahtlosen Signalübertragung zwischen einem Hörhilfegerät und einem externen Gerät sind technisch verhältnismäßig aufwendig, fehleranfällig und hinsichtlich der erreichbaren Datenübertragungsraten stark eingeschränkt.

Eine Kabelverbindung mit elektrischen Kontakten an der Schnittstelle zwischen dem Hörhilfegerät und dem Kabel hat den Nachteil, dass die manuelle Anbringung eines Steckers, beispielsweise in Form eines Audioschuhs, an die elektrischen Kontakte des Hörhilfegerätes oft schwierig ist, womit insbesondere ältere Menschen aufgrund eingeschränkter taktiler Sensorik und verminderten manuellen Fähigkeiten Schwierigkeiten haben. Außerdem neigen elektrische Kontakte zu Korrosion bzw. Verschmutzung, wodurch die Verbindung unzuverlässig wird. Dadurch können störende Geräusche bei einer Audioübertragung entstehen.

Aus der DE 197 04 119 C1 ist eine Hörbrille mit einem ersten und einem zweiten Hörhilfegerät zur binauralen Versorgung eines Benutzers bekannt, bei der über die Brillenbügel eine optische Signalübertragung von dem ersten Hörhilfegerät zu dem zweiten Hörhilfegerät erfolgt.

Aus der DE 298 19 993 U1 ist ein Hörhilfegerät mit einem Audio- und/oder Programmieranschluss bekannt. Die Signalübertragung zwischen dem Hörhilfegerät und dem Audio- und/oder Programmieranschluss erfolgt mittels mechanischer Kontakte.

Aus der DE 38 34 962 A1 ist ein Programmiergerät für ein Hörgerät bekannt, welches zur Verbindung mit einem Personalcomputer oder einem Drucker mit einer Standard-Schnittstelle ausgestattet ist. Die Schnittstelle enthält Optokoppler, damit die Sicherheitsbedingungen für medizinische Geräte auch beim Anschluss üblicher Personal-Computer erfüllt werden.

Aufgabe der vorliegenden Erfindung ist es, eine Schnittstelle zur Signalübertragung zwischen einem Hörhilfegerät und einem externen Gerät zu schaffen, die kostengünstig und einfach in der Handhabung ist und zudem verhältnismäßig hohe Datenübertragungsraten zulässt.

Diese Aufgabe wird gelöst durch eine Schnittstelleneinrichtung zur Signalübertragung zwischen einem Hörhilfegerät und einem externen Gerät, umfassend eine erste am oder im Hörhilfegerät angeordnete Signalübertragungseinrichtung und eine mechanisch lösbar mit dem Hörhilfegerät verbindbare zweite Signalübertragungseinrichtung, wobei Mittel zur optischen Signalübertragung zwischen der ersten und der zweiten Signalübertragungseinrichtung vorhanden sind.

Die Erfindung zeichnet sich dadurch aus, dass die Signalübertragung an der Schnittstelle zwischen dem Hörhilfegerät und der an dem Hörhilfegerät befestigbaren zweiten Signalübertragungseinrichtung auf optischem Wege erfolgt. Die dazu verwendeten optischen Sende- und Empfangsvorrichtungen, insbesondere Leuchtdioden und Empfangsdioden, sind unempfindlich gegenüber äußeren Einflüssen, kostengünstig, leicht zu justieren und zeichnen sich zudem durch eine geringe für die Signalübertragung erforderliche Energiezufuhr aus. Hohe Signalübertragungsraten werden dadurch erreicht, dass der Abstand zwischen den Mitteln zur optischen Signalübertragung im Anwendungsfall sehr gering ist und diese Mittel zudem optimal zueinander ausgerichtet sind.

Sowohl die Signalübertragungseinrichtung am Hörhilfegerät als auch die damit verbindbare zweite Signalübertragungseinrichtung können eine glatte, leicht zu pflegende Oberfläche aufweisen. Eine sichere Signalübertragung ist in der Regel auch dann gewährleistet, wenn die erste und die zweite Signalübertragungseinrichtung nicht exakt zueinander ausgerichtet sind. Dies erleichtert die Herstellung der Verbindung zwischen dem Hörhilfegerät und dem externen Gerät insbesondere bei älteren Benutzern. Weiterhin ist die optische Signalübertragung weitestgehend unempfindlich gegenüber Störsignalen, beispielsweise elektromagnetischen Störsignalen, die von Mobiltelefonen und dergleichen ausgehen.

Bei den mittels der Erfindung übertragbaren Signalen kann es sich um Steuersignale, Datensignale, Audiosignale usw. handeln. Die Signale können in analoger oder digitaler Form vorliegen. Bei niedrigen geforderten Signalübertragungsraten ist in der Regel eine serielle Signalübertragung ausreichend. Werden höhere Signalübertragungsraten gefordert, beispielsweise zur Übertragung digitaler Audiosignale, erfolgt die Signalübertragung mittels der Schnittstelleneinrichtung vorzugsweise in paralleler Form. Hierfür weisen die erste sowie die zweite Signalübertragungseinrichtung mehrere parallel angeordnete Sende- und Empfangsvorrichtungen auf.

Gewöhnlich wird die Signalübertragung zwischen dem Hörhilfegerät und dem externen Gerät ausgehend von dem externen Gerät zu dem Hörhilfegerät erfolgen. Es ist jedoch durchaus auch möglich, dass auch eine Signalübertragung in umgekehrter Richtung stattfindet. Beispielsweise können bei der Programmierung Daten aus dem Hörhilfegerät ausgelesen werden. In diesem Fall sind sowohl bei der ersten als auch bei der zweiten Signalübertragungseinrichtung Sende- und Empfangsvorrichtungen vorzusehen.

Bei einer besonderen Ausführungsform der Erfindung umfasst die zweite Signalübertragungseinrichtung Mittel zur drahtlosen Signalübertragung zwischen dem externen Gerät und der Signalübertragungseinrichtung. Beispielsweise ist die zweite Signalübertragungseinrichtung mit einer Bluetooth-Sende- und Empfangseinheit ausgestattet. Die so zwischen dem externen Gerät und der zweiten Signalübertragungseinrichtung drahtlos übermittelten Signale werden dann gemäß der Erfindung auf optischem Wege zwischen der zweiten Signalübertragungseinrichtung und dem Hörhilfegerät übermittelt. Im Hörhilfegerät selbst ist somit keine Bluetooth-Sende- und Empfangseinheit erforderlich, sondern nur in der zweiten Signalübertragungseinrichtung. Dies ermöglicht eine kleinere Bauweise des Hörhilfegerätes.

Die Erfindung wird nachfolgend anhand von Ausführungsbeispielen erläutert. Es zeigen:
- FIG. 1: ein Ende eines hinter dem Ohr tragbaren Hörhilfegerätes und einen mechanisch damit verbindbaren Audioschuh und
- FIG. 2: einen Teil eines hinter dem Ohr tragbaren Hörhilfegerätes und eine mittels einer magnetischen Halterung daran befestigten Signalübertragungseinrichtung.

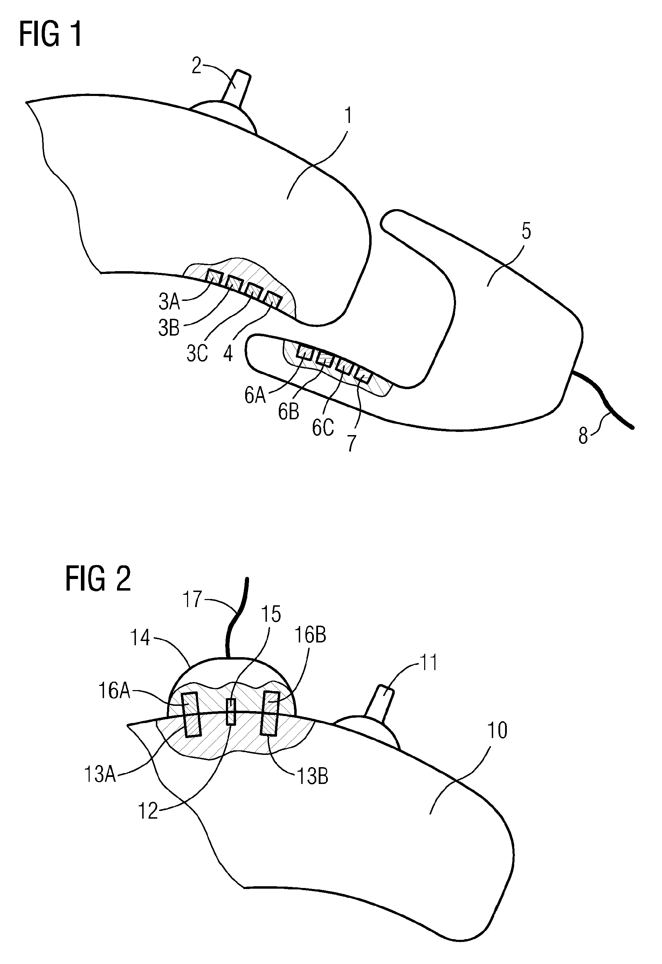

FIG. 1 zeigt ein Ende eines hinter dem Ohr tragbaren Hörhilfegerätes 1. Dieses ist mit einem Schalter 2 ausgestattet, mit dem das Hörhilfegerät zum Beispiel ein- und ausgeschaltet werden kann. Das Hörhilfegerät 1 umfasst ferner eine Signalübertragungseinrichtung zur Signalübertragung zwischen dem Hörhilfegerät 1 und einem externen Gerät. Die Signalübertragungseinrichtung des Hörhilfegerätes weist drei optische Empfangsdioden 3A bis 3C auf, mittels derer eine parallele optische Signalübertragung zu dem Hörhilfegerät ermöglicht wird. Weiterhin ist eine Leuchtdiode 4 vorhanden, die auch eine Signalübertragung von dem Hörhilfegerät 1 zu einem externen Gerät ermöglicht. Die Sende- bzw. Empfangsdioden sind so in das Hörhilfegerät 1 integriert, dass auch im Bereich der Dioden ein glatter Verlauf des Hörhilfegerätegehäuses gegeben ist. Hierzu sind beispielsweise in das Gehäuse lichtdurchlässige Abschnitte integriert.

FIG. 1 zeigt weiterhin eine zweite Signalübertragungseinrichtung in Form eines Audioschuhs 5, der mechanisch lösbar an dem Hörhilfegerät 1 befestigt werden kann. Der Audioschuh 5 lässt sich beispielsweise reibschlüssig mit dem Gehäuse des Hörhilfegerätes 1 verbinden. Ebenso wie das Hörhilfegerät 1 umfasst auch der Audioschuh 5 Mittel zur optischen Signalübertragung zwischen dem Audioschuh und dem Hörhilfegerät 1, insbesondere drei Leuchtdioden 6A bis 6C zum Senden optischer Signale sowie eine optische Empfangsdiode 7. Bei auf das Hörhilfegerät 1 aufgestecktem Audioschuh 5 sind die Dioden 3A bis 3C und 4 des Hörhilfegerätes 1 bzw. 6A bis 6C und 7 des Audioschuhs 5 zumindest näherungsweise einander gegenüberliegend angeordnet. Mit der gezeigten Anordnung kann somit eine parallele optische Signalübertragung von dem Audioschuh 5 zu dem Hörhilfegerät 1 sowie eine serielle Signalübertragung von dem Hörhilfegerät 1 zu dem Audioschuh 5 erfolgen. Die Signalleitung zwischen dem Audioschuh 5 und dem externen Gerät erfolgt im Ausführungsbeispiel drahtgebunden über das Kabel 8. Es ist jedoch auch möglich, dass der Audioschuh 5 eine Sende- und Empfangseinrichtung zur drahtlosen elektromagnetischen Signalübertragung zwischen dem Audioschuh 5 und dem externen Gerät umfasst (nicht dargestellt).

Ein weiteres Ausführungsbeispiel der Erfindung zeigt FIG. 2, bei der ebenfalls ein Ende eines hinter dem Ohr tragbaren Hörhilfegerätes 10 dargestellt ist. Auch dieses umfasst einen Schalter 11, z. B. zum Ein- oder Ausschalten des Hörhilfegerätes 10. Weiterhin zeigt das Ausführungsbeispiel eine sehr einfach und kostengünstig aufgebaute Schnittstelleneinrichtung mit einer im Hörhilfegerät 10 angeordneten optischen Empfangsdiode 12. Diese ist so in das Hörhilfegerät 10 integriert, dass ein glatter Verlauf des Hörhilfegerätegehäuses gegeben ist. Weiterhin weist die Schnittstelleneinrichtung eine lösbar mit dem Hörhilfegerät 10 verbindbare Signalübertragungseinrichtung 14 mit einer Leuchtdiode 15 auf. Zur lösbaren Verbindung der Signalübertragungseinrichtung 14 an dem Gehäuse des Hörhilfegerätes 10 sind an dem Hörhilfegerät 10 magnetische oder magnetisierbare Elemente 13A und 13B vorhanden. Ebenso umfasst auch die Signalübertragungseinrichtung 14 magnetische oder magnetisierbare Elemente 16A und 16B, die derart ausgebildet sind, dass eine magnetische Halterung und Fixierung der Signalübertragungseinrichtung 14 an dem Hörhilfegerät 10 erfolgt. Damit wird das Befestigen und Lösen der Signalübertragungseinrichtung 14 an dem Hörhilfegerät 10 auf sehr einfache Weise ermöglicht. Sobald sich die Schnittstelleneinrichtung 14 in unmittelbarer Nähe zum Hörhilfegerät 10 befindet, wird sie magnetisch angezogen, wobei sich die Leuchtdiode 15 und die Empfangsdiode 12 bei einer geschickten Auswahl und Anordnung der magnetischen oder magnetisierbaren Elemente 13A, 13B, 16A und 16B selbsttätig justieren. Zur Signalübertragung zwischen der Signalübertragungseinrichtung 14 und dem externen Gerät ist eine Signalleitung 17 vorhanden. Diese ist an die Leuchtdiode 15 angeschlossen. Handelt es sich hingegen bei dem Signalleiter 17 um einen optischen Leiter, so ist dieser vorzugsweise durch die Signalübertragungseinrichtung 14 hindurchgeführt und macht somit die Leuchtdiode 15 überflüssig. Das Ende des optischen Leiters wirkt in diesem Fall als optischer Sender. Insgesamt zeigt das Ausführungsbeispiel somit eine sehr einfach ausgeführte und leicht handhabbare Schnittstelleneinrichtung, die zudem eine hohe Signalübertragungsrate bei geringer Störanfälligkeit gewährleistet.

## Patentansprüche

1. Schnittstelleneinrichtung zur Signalübertragung zwischen einem Hörhilfegerät (1, 10) und einem externen Gerät, umfassend eine erste am oder im Hörhilfegerät (1, 10) angeordnete Signalübertragungseinrichtung und eine mechanisch lösbar mit dem Hörhilfegerät (1, 10) verbindbare zweite Signalübertragungseinrichtung (5, 14), der das zu übertragende Signal in Form eines elektrischen oder elektromagnetischen Signals zuführbar ist, **gekennzeichnet durch** Mittel zur optischen Signalübertragung zwischen der ersten und der zweiten Signalübertragungseinrichtung (5, 14).

2. Schnittstelleneinrichtung nach Anspruch 1, wobei die zweite Signalübertragungseinrichtung (5, 14) wenigstens eine optische Sendevorrichtung und insbesondere eine Leuchtdiode (6A bis 6C; 15) aufweist.

3. Schnittstelleneinrichtung nach Anspruch 1, wobei die erste Signalübertragungseinrichtung wenigstens eine optische Empfangsvorrichtung und insbesondere eine Empfangsdiode (3A bis 3C; 12) aufweist.

4. Schnittstelleneinrichtung nach einem der Ansprüche 1 bis 3, ausgebildet zur seriellen Signalübertragung.

5. Schnittstelleneinrichtung nach einem der Ansprüche 1 bis 3, ausgebildet zur parallelen Signalübertragung.

6. Schnittstelleneinrichtung nach einem der Ansprüche 1 bis 5, wobei die zweite Signalübertragungseinrichtung als Audioschuh (5) für das Hörhilfegerät (1) ausgebildet ist.

7. Schnittstelleneinrichtung nach einem der Ansprüche 1 bis 6, wobei die zweite Signalübertragungseinrichtung (14) mittels einer magnetischen Halterung (13A, 13B; 16A, 16B) lösbar am Hörhilfegerät (10) befestigbar ist.
